# DEMANDE DE BREVET EUROPEEN

(11) **EP 3 100 939 A1**
(43) Date de publication de la demande: **07.12.2016**
(21) Numéro de dépôt: 16171974.5
(22) Date de dépôt: 30.05.2016
(51) Int. Cl.: B62K 19/30, B62M 9/16, B62K 25/02

(54) **DISPOSITIF DE REGLAGE DE TENSION D'UNE TRANSMISSION A COURROIE, NOTAMMENT POUR UNE APPLICATION A UN VELO**

(30) Priorité: 03.06.2015 FR 1555053
(71) Demandeur: SVO, 24330 Blis et Born (FR)
(72) Inventeur: BESSON, Thierry, 24330 BLIS ET BORN (FR); BERNARD, Frédéric, 31220 LE PLAN (FR); GUIRAL, Alexandre, 31400 TOULOUSE (FR)
(74) Mandataire: Aquinov

(57) **Abrégé**

L'objet de l'invention est un dispositif de réglage de tension d'un organe de transmission à la roue arrière d'un vélo, comprenant un plateau avant, un pignon arrière, une courroie ou chaîne de transmission, une fourche arrière supportant l'axe XX' de roue arrière, caractérisé en ce que ce dispositif de réglage comprend deux pièces (34-1, 34-2) de liaison, droite et gauche, rapportées ou venues de fabrication avec la fourche arrière (28), deux inserts (36-1, 36-2) droit et gauche montés sur lesdites pièces (34-1, 34-2) de liaison et munis de logements (38-1, 38-2) borgnes, prévus pour recevoir les extrémités de l'axe de roue XX' et des moyens (44-1, 44-2) de réglage en translation interposés respectivement entre lesdites pièces (34-1, 34-2) de liaison et lesdits inserts (36-1, 36-2).

## Description

La présente invention a pour objet un dispositif de réglage de tension d'une transmission à courroie, notamment dans le cas d'une transmission pour un vélo, plus particulièrement encore un vélo tout terrain.

On connaît les transmissions par chaîne utilisées pour les vélos, notamment les vélos tout terrain.

Ces transmissions comportent généralement au moins un plateau denté et au moins un pignon denté reliés entre eux par une chaîne.

De façon perfectionnée, il est prévu plusieurs plateaux et plusieurs pignons ainsi que des moyens dérailleurs pour passer d'un plateau à l'autre et d'un pignon à l'autre.

Ces moyens connus présentent de très nombreux inconvénients.

Tout d'abord le système est vulnérable en tout terrain et le dérailleur arrière notamment est soumis à des risques de bris fréquents, en cas de chute bien sûr mais surtout en cas de choc contre les reliefs du terrain, souvent très accidenté, ce qui est le propre du tout terrain. Dans certains cas, un caillou projeté par la roue avant de l'utilisateur lui-même conduit à des casses de ce type.

Un autre inconvénient est celui de la délicatesse des réglages initialement mais aussi au fur et à mesure de l'usure, que ce soit en vélo de ville ou en vélo tout terrain ou encore en randonnée.

A propos d'usure, les pignons, les plateaux dans une moindre mesure car ils disposent de plus de dents, sont soumis à une forte usure du fait de leur exposition à l'eau, aux poussières contenues, à la boue, au sable et autres agressions liées aux conditions climatiques. L'entretien est constant car il faut nettoyer, sécher, lubrifier.

Dans tous les cas, les maillons ont des rouleaux, des joints, des axes et les particules abrasives s'y accumulent nécessairement et y subsistent, même avec un nettoyage soigneux.

Il reste également le fait que dans le cas d'un vélo équipé de plusieurs plateaux et de plusieurs pignons, il faut deux commandes, une pour chacun des dérailleurs, même si des commandes doubles à commande unique ont été imaginées, sans pour autant prendre de parts significatives de marché.

En fonctionnement, il est à noter que les dérailleurs, recevant de la boue notamment le dérailleur arrière, peuvent se bloquer en cours d'utilisation, sans compter les efforts supplémentaires demandés à l'utilisateur du fait des frottements mécaniques supplémentaires engendrés par cette boue.

Une fois huilée, des projections d'huile peuvent se produire à partir de la chaîne sur le vélo d'une part et sur l'utilisateur d'autre part.

Cette huile est complexe à choisir : si elle est trop fluide, elle pénètre bien dans les maillons, mais elle est projetée et se trouve vite diluée par la boue, l'eau et le fonctionnement. Une huile minérale est adaptée mais une fois le solvant de diffusion évaporé, il subsiste une très fine couche et la lubrification est très limitée donc elle est réservée aux terrains secs.

Une huile trop épaisse et filante reste collée sur les maillons mais elle capte les poussières, la boue et forme une pâte qui devient plus abrasive que lubrifiante.

Ces dérailleurs nécessitent aussi une connaissance de l'utilisation et un pratiquant débutant peut aisément être rebuté par ces manettes et autres commandes de dérailleurs.

Un fait incontestable est que la transmission par chaîne engendre des croisements de chaîne, préjudiciables à la durée de vie des composants de la transmission et engendrant des consommations énergétiques inutiles. Il faut donc veiller à conserver le meilleur alignement de chaîne tout au long du fonctionnement.

Un inconvénient rarement mentionné est le nombre de ratios utiles. Dans le cas où on utilise par exemple 3 plateaux et une cassette de 11 pignons, soit 33 développements, on constate que seulement 12 à 15 développements sont réellement disponibles si l'on souhaite conserver un alignement de chaîne adapté. Or, on bénéficie de ces développements moyennant une très bonne pratique et une manoeuvre très régulière des deux commandes en cours d'utilisation. Ceci montre que les dispositifs connus sont de type complexe et qu'il est nécessaire de trouver des solutions plus adaptées, simplifiées et fiables.

Il existe un autre moyen de disposer des seuls développements utiles, en utilisant une "boîte de vitesses". Il s'agit d'un boîtier étanche qui renferme des pignons dans un bain d'huile, aptes à coopérer entre eux pour faire varier les ratios sous l'action d'une commande. Ces pignons sont solidaires d'un arbre entraîné par un pignon d'entrée mis en rotation par la puissance développée par l'utilisateur et la pignonnerie entraîne à son tour une couronne interne périphérique solidaire de la roue arrière.

Ce boîtier est donc étanche et non susceptible d'agressions extérieures telles que l'eau, la boue.

Les pignons permettent uniquement d'atteindre une série de développements calculés et choisis par l'utilisateur en fonction de sa puissance, de sa pratique, de ses objectifs.

Il suffit d'une seule commande rapportée au cintre du vélo, les ratios peuvent être modifiés même à l'arrêt puisqu'il n'y a pas de déraillement provoqué donc il ne faut pas que la transmission soit en rotation pour manoeuvrer la commande.

Pour la pratique, dans un sens de manoeuvre de la commande on augmente les développements, dans le sens opposé, on diminue les développements, ce qui est tout à fait intuitif, rendant l'utilisation simple, ludique, laissant l'utilisateur tout à son loisir de la pratique.

Les réglages sont réalisés en usine à la fabrication, l'usure est négligeable dans le cas d'un vélo. De tels produits sont disponibles sur le marché, l'un d'entre eux est commercialisé sous la dénomination commerciale "Rohloff".

Il subsiste un élément de fragilité de la transmission du type à moyeu intégrant les vitesses, à savoir la chaîne de transmission et le plateau avant. Il faut en effet uniquement un plateau et une chaîne qui attaque le pignon d'entrée du boîtier de changement de vitesses, ce qui permet d'ailleurs de solutionner l'alignement de chaîne qui reste nécessairement parfait.

Afin de supprimer ces inconvénients, la chaîne de transmission qui optimise encore le boîtier de changement de vitesses est remplacée par une transmission à courroie.

Les plateau et pignon sont de plus grande largeur, cannelés et la chaîne est une courroie crantée, les crans de la courroie coopérant avec les cannelures des plateau et pignon.

On atteint ainsi un poids équivalent à une transmission par chaîne.

Dans ce cas, même en cas de pluie, de boue, la courroie se nettoie au fur et à mesure car la boue ne peut pas adhérer sur les crans de la courroie, il n'y a pas d'usure comme avec des maillons, la courroie est guidée, aucune lubrification nécessaire en plus des avantages ci-avant énumérés liés à la présence de la boîte de vitesse.

Comme pour les chaînes, il subsiste néanmoins un problème lié à l'usure de la courroie non pas du fait d'une usure mécanique par abrasion, mais du fait que ladite courroie se détend car la matière dont elle est constituée à savoir un élastomère renforcé d'une trame de fibres, généralement, se détend aussi.

Les facteurs extérieurs amènent également à tendre la courroie ou à régler sa tension comme une chaîne : la température, les actions mécaniques liées aux sollicitations de l'utilisateur. Dans tous les cas, il faut pouvoir tendre la courroie initialement, au premier montage, au fur et à mesure de l'usure et éventuellement mais non nécessairement lors d'un démontage de roue, du fait d'une crevaison par exemple, ou d'un changement de pneumatique.

Le problème qui se pose dans un tel agencement est la reprise des efforts dans le cadre du vélo car il faut pouvoir régler la tension d'une chaîne ou d'une courroie mais bien entendu sans faire perdre au cadre sa rigidité mécanique.

Il est rappelé que l'axe de roue arrière est supporté, de chaque côté, au point d'intersection du hauban et du bras et que tous les efforts subis ou transmis à la roue arrière passent par ce point. On entend par efforts le poids, les chocs, les efforts du cycliste et les efforts de freinage. De plus, en cas de freinage à disque, l'étrier de freinage doit être supporté par le dispositif afin de pouvoir se déplacer au gré des réglages, de façon identique.

On connaît une demande de brevet JP 2013 252784 qui décrit une fourche arrière munie de moyens de réglage de la tension d'une chaîne. Ces moyens comprennent un hauban incliné 2 et un hauban horizontal 1 reliés par une première pièce 20 qui est vissée en 30c sur le hauban incliné et qui solidaire du hauban horizontal.

Une seconde pièce 11 reçoit l'axe de roue et se trouve vissée en partie inférieure par la vis 30b sur la première pièce 20 et en partie supérieure toujours sur la première pièce 20 par une troisième vis 30a.

Deux trous oblongs 23a et 23b permettent une translation et un réglage de la seconde pièce par rapport à la première grâce à une vis 31 qui traverse la première pièce, montée libre en rotation et qui visse dans la seconde pièce.

Un tel agencement prévoit une vis de réglage traversante ce qui limite très fortement la résistance mécanique et qui ne pourrait donc pas convenir pour des pratiques de vélo tout terrains, comme proposé par la présente invention.

On remarque également que ce document prévoit un réglage interne de la première pièce sans aucun appui sur le cadre.

De plus, la première pièce est vissée sur le hauban incliné, ce qui là encore, affaiblit considérablement la résistance mécanique du montage.

Les deux pièces telles que décrites sont symétriques, ce qui ne permet pas l'agencement d'une pièce d'une forme et l'autre pièce d'une autre forme afin d'accueillir un montage de frein à disque par exemple.

Ce document montre un maintien mécanique avec deux vis qui traversent les extrémités de la seconde pièce qui tient par ces deux vis, voire par la vis de réglage. Or un maintien mécanique implique que la seconde viennent en appui sur une surface qui assure la rigidité, la vis venant assurer un placage des surfaces. Dans le cas contraire, celui de ce document de l'art antérieur, la rigidité du cadre souffre très sérieusement d'un tel montage. Un pratiquant de vélo, notamment de vélo tout terrain, sait à quel point la faible rigidité d'une cadre est consommateur d'énergie puisque celle-ci est absorbée par les déformations du cadre plutôt que par la motricité dudit vélo.

La présente invention propose un agencement avec un dispositif de réglage de la tension d'un organe de transmission, chaîne ou courroie, associé au cadre d'un vélo à transmission notamment comprenant un seul pignon et un seul plateau, adapté pour permettre un réglage aisé, rapide, sans effort, de précision.

Ce dispositif pallie les inconvénients énumérés ci-avant sur la base de l'art antérieur connu. Le dispositif est maintenant décrit en regard des dessins annexés, dessins sur lesquels les différentes figures représentent un agencement particulier, illustratif mais non limitatif, concernant une transmission avec un boîtier de changement de vitesses, permettant d'illustrer l'invention, plus particulièrement :
- Figure 1 : une vue en perspective d'une transmission par courroie, avec un boîtier de changement de vitesses,
- Figure 2 : une vue en perspective de détail de la fourche arrière, bras et haubans recevant le dispositif de réglage selon la présente invention,
- Figures 3A et 3B : des vues face intérieure et extérieure de l'agencement des réglages côté opposé au pignon d'entraînement.
- Figures 4A et 4B : des vues face extérieure et face intérieure de l'agencement des réglages côté pignon d'entraînement

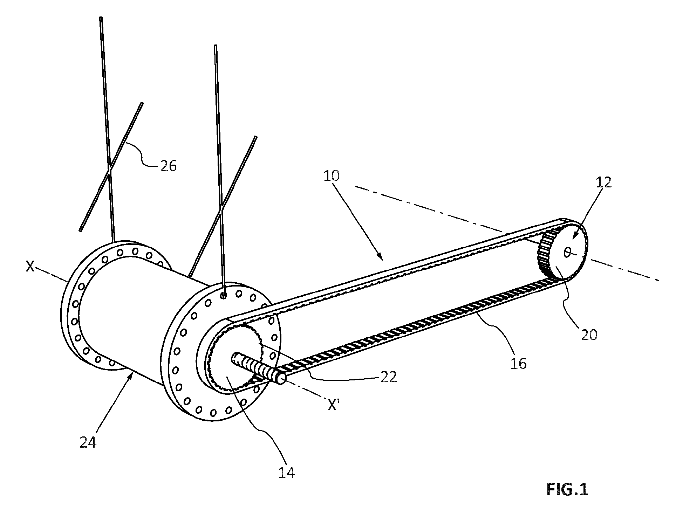

Sur la figure 1, on a représenté une transmission 10 avec un plateau 12 avant, un pignon 14 arrière, une courroie 16 de transmission munie de crans 18.

Le dispositif s'appliquerait de la même façon à la même transmission à chaîne, à une transmission à plateau et pignon uniques et une chaîne ou une courroie ou encore à une transmission à un plateau, un pignon unique fixe et un organe de transmission à chaîne ou à courroie.

Le dispositif s'applique de fait à une transmission comprenant un plateau, un pignon et une boîte de changement de vitesses avec pignonnerie, formant moyeu du type Rohloff.

Les plateau 12 et pignon 14 sont connus et comportent des crans 20, 22 de profil conjugué de celui des crans 18 de la courroie de façon à coopérer.

Le pignon 14 est solidaire d'un arbre d'entraînement (non représenté) suivant l'axe XX', d'un boîtier 24 de changement de vitesses avec pignonnerie, formant moyeu et sur la périphérie duquel sont rapportés les rayons 26 de la roue arrière. Cette périphérie est mobile en rotation et entraînée par la pignonnerie interne au boîtier de changement de vitesses.

Le cadre du vélo comporte de façon connue et non représentée, un boîtier de pédalier avant supportant des manivelles et le plateau 12, bien connus de l'homme de l'art.

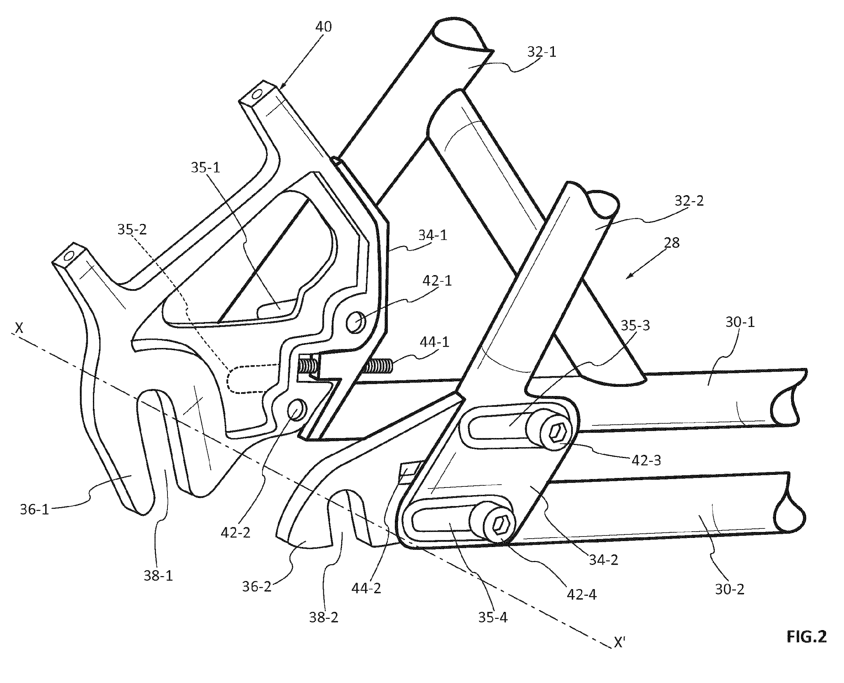

A l'arrière, comme montré sur la figure 2, la fourche arrière 28 comprend deux bras sensiblement horizontaux 30-1 gauche et 30-2 droit en considérant le sens d'avancement du vélo et deux haubans 32-1 gauche et 32-2 droit.

Ces deux couples bras et haubans se coupent un point d'intersection sensiblement commun avec l'axe de la roue arrière comme cela sera expliqué ci-après.

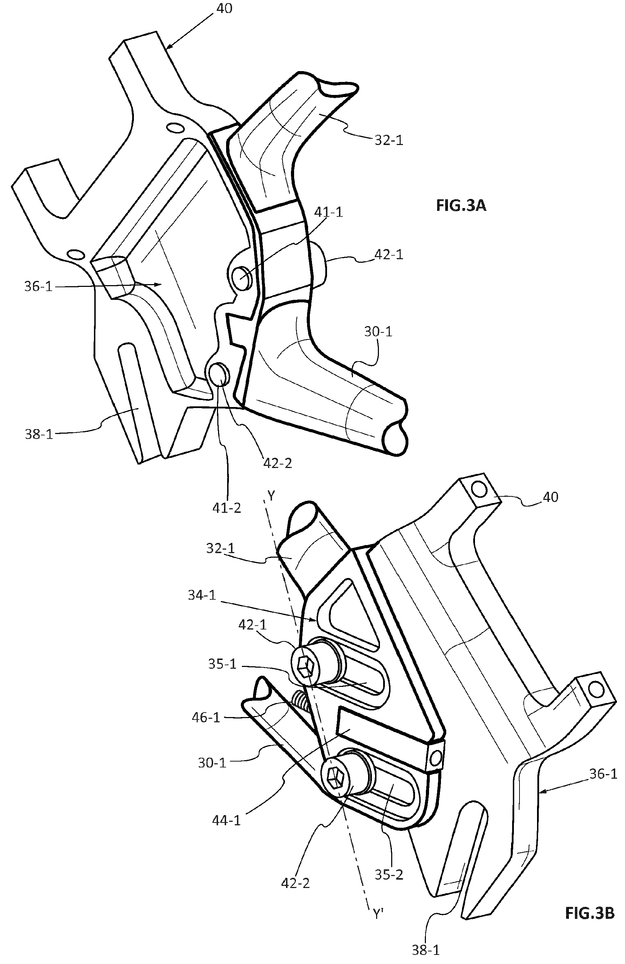

Le dispositif selon la présente invention comprend une première pièce 34-1 de liaison, rapportée ou venue de fabrication avec la fourche arrière 28, figures 3A et 3B. La liaison peut avantageusement être soudée.

Cette pièce 34-1 de liaison est solidaire de façon parfaitement rigide du bras 30-1 et du hauban 32-1. C'est elle qui constitue le point d'intersection. Cette pièce 34-1 de liaison est assimilable à un encastrement et forme une surface S1.

Cette pièce 34-1 de liaison comprend deux lumières 35-1, 35-2 oblongues, orientées sensiblement suivant l'axe passant par l'axe de pédalier et l'axe de roue arrière. Ces lumières forment des glissières. Le terme "sensiblement" est utilisé dans le cas présent car il existe des vélos, par exemple suspendus à l'arrière, avec un débattement et la disposition des trous reste constante mais l'inclinaison de l'axe passant par l'axe de pédalier et l'axe de roue arrière se modifie au gré des actions de la suspension mais les variations angulaires sont extrêmement limitées d'où le recours au terme "sensiblement".

La pièce 34-1 de liaison, solidaire des bras 30-1 et hauban 32-1, reçoit un insert 36-1 qui est amovible et qui constitue une pièce à part entière. Cet insert présente une surface au moins égale à S1 de façon à disposer d'une surface d'appui commune sensiblement égale à S1. Cette pièce de liaison comprend un logement 38-1 borgne prévu pour recevoir une première extrémité de l'axe XX' de roue arrière, axe qui traverse le boîtier 24 de changement de vitesses, généralement à travers l'arbre d'entraînement dudit boîtier.

Ce logement borgne 38-1 est orienté vers le bas, pour venir naturellement en appui sur ledit axe XX' de roue par le fond de logement. Des moyens de blocage soit par écrou, soit par axe à blocage rapide assurent la fixation sur ces pattes, ces moyens de blocage étant parfaitement connus.

Un des inserts, en l'occurrence l'insert gauche 36-1, est équipé de pattes 40 destinées à recevoir un étrier d'un frein à disque, non représenté, ledit disque étant, lui, solidaire de la partie mobile du boîtier de changement de vitesses, donc de la roue, ceci de façon connue et venant passer dans l'étrier de frein.

Cet insert 36-1 comporte également deux taraudages 41-1 et 41-2 destinés à recevoir chacun une vis 42-1 et 42-2 de serrage, chacune desdites vis passant préalablement à travers les lumières 35 oblongues.

Ces taraudages 41-1 et 41-2 sont positionnés de façon très spécifique et l'axe YY' passant par les deux taraudages doit être sensiblement orienté vers l'avant, comme montré sur les dessins sensiblement selon l'axe médian entre la verticale et l'axe de pédalage qui correspond à la droite reliant l'axe de pédalier et l'axe de roue arrière. Ainsi le taraudage supérieur est en amont du taraudage inférieur.

Cette inclinaison permet une reprise des efforts et surtout une transmission de ces efforts suivant l'axe du hauban 32-1, tant en compression qu'en traction.

Des moyens 44-1 de réglage en translation sont interposés entre la pièce 34-1 de liaison et l'insert 36-1. Ces moyens comprennent une vis 46-1 montée vissante dans la pièce 34-1 de liaison et prenant appui sur l'insert 36-1, cette pièce restant intégrale sans perforation, sans pas de vis supplémentaire.

L'axe de translation des moyens 44-1 de réglage en translation est parallèle à l'axe des lumières 35-1 et 35-2 oblongues.

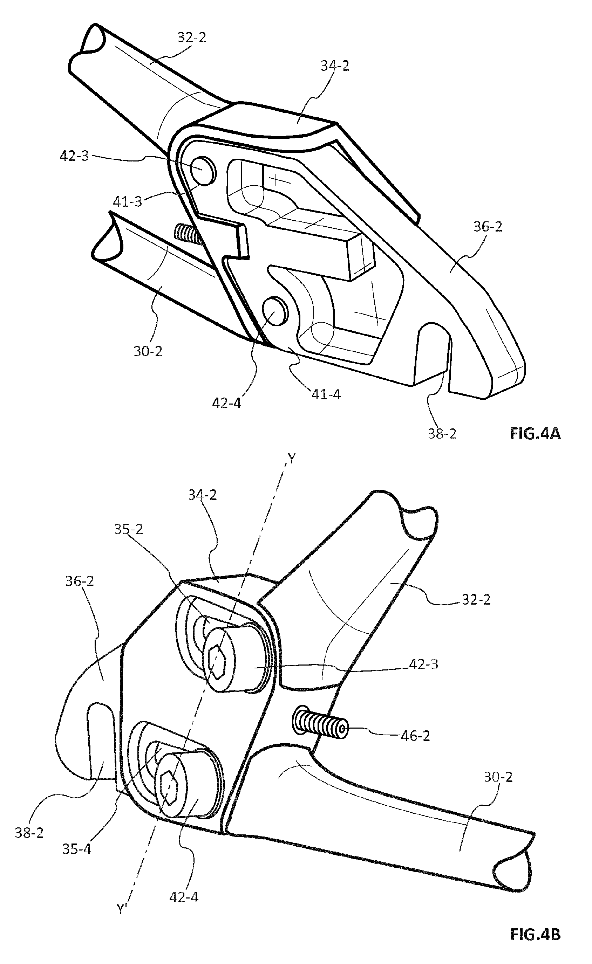

Une seconde pièce 34-2 de liaison est rapportée ou venue de fabrication avec la fourche arrière 28, côté droit, voir les figures 4A et 4B, en plus de la figure 2.

Cette pièce 34-2 de liaison est solidaire du bras 30-2 et du hauban 32-2. Elle présente une surface S2.

Cette pièce 34-2 de liaison comprend deux lumières 35-3 et 35-4 oblongues, orientées sensiblement suivant l'axe passant par l'axe de pédalier et l'axe de roue arrière. Ces lumières forment des glissières. Le terme "sensiblement" est utilisé dans le cas présent car il existe des vélos, par exemple suspendus à l'arrière, avec un débattement et la disposition des trous reste constante mais l'inclinaison de l'axe passant par l'axe de pédalier et l'axe de roue arrière se modifie au gré des actions de la suspension mais les variations angulaires sont extrêmement limitées d'où le recours au terme "sensiblement".

La pièce 34-2 de liaison reçoit un insert 36-2 comprenant un logement 38-2 borgne prévu pour recevoir l'autre extrémité de l'axe de roue XX' qui traverse le boîtier 24 de changement de vitesses, généralement à travers l'arbre d'entraînement dudit boîtier. Cet insert 36-2 est d'une surface au moins égale à S2 de façon à disposer d'une surface de contact sensiblement égale à S2.

Un écrou est disposé sur l'extrémité de l'axe XX' pour assurer un serrage. Une tige à serrage rapide peut aussi être disposée pour assurer le serrage, comme indiqué précédemment.

Ce logement 38-2 borgne est orienté vers le bas, pour venir naturellement en appui sur ledit axe de roue par le fond de logement, sous l'effet du poids du vélo et de l'utilisateur, comme le logement 38-1.

Cet insert 36-2 comporte également deux taraudages 41-3 et 41-4 destinés à recevoir chacun une vis 42-3 et 42-4 de serrage, chacune desdites vis passant préalablement dans les lumières 35-3 et 35-4 oblongues, formant glissières.

Ces taraudages 41-3 et 41-4 sont positionnés de façon très spécifique et l'axe YY' passant par les deux taraudages doit être sensiblement orienté vers l'avant, comme montré sur les dessins sensiblement selon l'axe médian entre la verticale et l'axe de pédalage qui correspond à la droite reliant l'axe de pédalier et l'axe de roue arrière. Ainsi le taraudage supérieur est en amont du taraudage inférieur.

Cette inclinaison permet une reprise des efforts et surtout une transmission de ces efforts suivant l'axe du hauban 32-2, tant en compression qu'en traction.

Des moyens 44-2 de réglage en translation sont interposés entre la pièce 34-2 de liaison et l'insert 36-2. Ces moyens comprennent une vis 46-2 montée vissante dans la pièce 34-2 de liaison et prenant appui sur l'insert 36-2.

De nouveau l'insert 36-2 reste intègre, sans fragilisation supplémentaire par des trous ou autres taraudages, la résistance mécanique subsistant au nominal.

L'axe de translation des moyens 44-2 de réglage en translation est parallèle à l'axe des lumières 35-3, 35-4 oblongues.

Suivant l'agencement de l'invention, les deux inserts 36-1 et 36-2 peuvent être déplacés en translation en vissant ou dévissant chacune des vis 46-1 et 46-2 après avoir desserré les vis 42 de serrage.

Après resserrage, les surfaces S1 et S2 commune sont plaquées l'une contre l'autre et limite très fortement les torsions et assurent une immobilisation efficace, sans serrage à des couples élevés. Les pièces peuvent rester de taille limitée avec une visserie de dimensions limitées également si bien que le poids d'un tel montage est totalement favorable.

Le montage évite tout point faible, permet aussi la reprise des efforts au freinage en cas de montage d'un étrier.

Le déplacement en translation permet de régler la tension de la courroie par manoeuvre de ces vis puisque le plateau est fixe en translation donc le recul de l'axe de roue XX' assure une tension de la courroie de transmission.

Le matériau utilisé peut varier en fonction des besoins, à savoir du métal léger aluminium ou titane par exemple ou à base d'un polymère chargé pour lui conférer les propriétés mécaniques requises.

Cet agencement permet de réaliser un montage adaptatif et de régler la tension sans apporter de pièces lourdes et peu intégrées.

Dans le mode de réalisation représenté, les pièces en saillie sont très limitées, ce qui est recherché et appréciable notamment en vélo tout terrain.

Le dispositif est applicable à des vélos utilisant une transmission à courroie avec un changement de vitesses intégré au moyeu de la roue arrière, destinés à la ville de la même façon qu'à la pratique du tout chemin ou du tout terrain.

On note que la résistance mécanique du cadre est parfaitement préservée malgré la présence de pièces mobiles les deux inserts 34-1 et 34-2.

La rigidité du cadre n'est donc pas sacrifiée tout en offrant un réglage précis de la tension de l'organe de transmission, chaîne ou courroie sur un vélo.

La présente invention présente un avantage non négligeable en conservant la tension de réglage, y compris lorsque la roue est démontée lors d'une simple crevaison par exemple, la plupart du temps.

Lors du démontage de la roue, dans la plupart des cas, en fonction de la tension et de la géométrie des bras, l'axe XX' descend et sort des logements 38-1, 38-2 vers le bas sans avoir à dévisser les vis 42-1 à 42-4 pour déplacer les inserts 36-1, 36-2. Le remontage s'effectue de la même façon et le réglage n'est pas à refaire.

La description ci-dessus a été établie pour une courroie et un ensemble plateau/pignon cranté mais il en est de même pour une transmission à chaîne et plateau/pignon denté.

De même, la description a été établie dans le cas d'un cadre comportant une fourche arrière avec un bras et un hauban mais il existe des fourches arrière avec un bras unique droit et un bras unique gauche, sans hauban, dite aussi fourche "banane". Il est entendu que l'agencement de réglage avec une pièce de liaison et un insert de chaque côté selon la présente invention trouve tout naturellement application à ce type particulier de fourche. Les efforts mécaniques sont transmis dans le plan des ensembles droit et gauche hauban/bras et les inserts sont logés dans les pièces de liaison avec deux points de fixation qui conduisent à une rigidité tout à fait adaptée.

## Revendications

1. Dispositif de réglage de tension d'un organe (10) de transmission à la roue arrière d'un vélo, comprenant un plateau (12) avant, un pignon (14) arrière, une courroie (16) ou chaîne de transmission, une fourche arrière supportant l'axe XX' de roue arrière, **caractérisé en ce que** ce dispositif de réglage comprend deux pièces (34-1, 34-2) de liaison, droite et gauche, rapportées ou venues de fabrication avec la fourche arrière (28),présentant au moins une surface S1, S2, deux inserts (36-1, 36-2) droit et gauche montés sur lesdites pièces (34-1, 34-2) de liaison et munis de logements (38-1, 38-2) borgnes, prévus pour recevoir les extrémités de l'axe de roue XX', ces inserts ayant au moins une surface S1, S2 et des moyens (44-1, 44-2) de réglage en translation interposés respectivement entre lesdites pièces (34-1, 34-2) de liaison et lesdits inserts (36-1, 36-2).

2. Dispositif de réglage de tension d'un organe (10) de transmission à la roue arrière d'un vélo, selon la revendication 1, **caractérisé en ce que** les moyens (44-1, 44-2) de réglage en translation comprennent chacun une vis (46-1, 46-2) interposée respectivement entre la pièce (34-1, 34-2) de liaison et l'insert (36-1, 36-2) correspondant.

3. Dispositif de réglage de tension d'un organe (10) de transmission à la roue arrière d'un vélo, selon la revendication 1 ou 2, **caractérisé en ce que** les pièces (34-1, 34-2) de liaison comprennent chacune respectivement deux lumières (35-1, 35-2; 35-3, 35-4) oblongues, orientées sensiblement suivant l'axe passant par l'axe de pédalier et l'axe de roue arrière , lesdites lumières formant glissières et des vis (42-1 à 42-4) aptes à visser dans des taraudages (41-1 à 41-4) ménagés dans les inserts (36-1, 36-2).

4. Dispositif de réglage de tension d'un organe (10) de transmission à la roue arrière d'un vélo, selon la revendication 3, **caractérisé en ce que** les taraudages (41-1 à 41-4) ménagés dans les inserts (36-1, 36-2) sont disposés avec l'axe YY' passant par lesdits deux taraudages de chaque insert orienté vers l'avant.

5. Dispositif de réglage de tension d'un organe (10) de transmission à la roue arrière d'un vélo, selon la revendication 3 ou 4, **caractérisé en ce que** l'axe YY' passant par lesdits deux taraudages (41-1 à 41-4) de chaque insert (36-1, 36-2) se situe sensiblement selon l'axe médian entre la verticale et l'axe de pédalage qui correspond à la droite reliant l'axe de pédalier et l'axe de roue arrière, le taraudage supérieur étant en amont du taraudage inférieur.

6. Dispositif de réglage de tension d'un organe (10) de transmission à la roue arrière d'un vélo selon l'une quelconque des revendications précédentes, **caractérisé en ce que** les logements (38-1, 38-2) borgnes, prévus pour recevoir les extrémités de l'axe de roue XX' sont orientés vers le bas.

7. Dispositif de réglage de tension d'un organe (10) de transmission à la roue arrière d'un vélo selon l'une quelconque des revendications précédentes, **caractérisé en ce que** l'un des inserts (36-1) porte des pattes (40) de montage d'un étrier d'un frein à disque.

8. Dispositif de réglage de tension d'un organe (10) de transmission à la roue arrière d'un vélo selon l'une quelconque des revendications précédentes, **caractérisé en ce que** l'organe (10) de transmission comprend un plateau (12) avec des crans (20), un pignon (14) avec des crans (22) et une courroie (16) de transmission munie de crans (18) de profil conjugué des crans (20, 22) des plateau et pignon ainsi qu'un boîtier (24) de changement vitesses avec pignonnerie formant moyeu.
